# EUROPEAN PATENT APPLICATION

(11) **EP 4 738 001 A1**
(43) Date of publication of application: **06.05.2026**
(21) Application number: 24852224.5
(22) Date of filing: 02.08.2024
(51) Int. Cl.: G03B 5/04, G03B 3/10, G03B 13/36, G03B 17/12, H04N 23/51, H04N 23/54, H04N 23/55, H02K 41/035

(54) **ELECTRONIC DEVICE COMPRISING CAMERA MODULE**

(30) Priority: 08.08.2023 KR 20230103639; 01.09.2023 KR 20230116371
(71) Applicant: Samsung Electronics Co., Ltd., Suwon-si, Gyeonggi-do 16677 (KR)
(72) Inventor: AN, Hyosang, Suwon-si, Gyeonggi-do 16677 (KR)
(74) Representative: Appleyard Lees IP LLP
(86) International application number: PCT/KR2024/011421
(87) International publication number: WO 2025/033870

(57) **Abstract**

This camera module comprises: an OIS structure, which moves in the direction perpendicular to an optical axis and includes a first OIS guide unit and a second OIS guide unit; an AF structure, which includes an AF guide unit, is disposed inside the OIS structure and moves in the optical axis direction; a first magnetic body disposed in the first OIS guide unit; a second magnetic body disposed in the second OIS guide unit; a first OIS coil, which faces one surface of the first magnetic body and allows the OIS structure to move in the first axis direction perpendicular to the optical axis; a second OIS coil allowing the OIS structure to move in the second axis direction perpendicular to the optical axis and the first axis; an AF coil, which is fixed to the AF guide unit and allows the AF structure to move along the optical axis; an AF ball disposed between the AF guide unit and the first OIS guide unit; and an OIS ball disposed between a camera housing and the OIS structure.

## Description

### [Technical Field]

Embodiments disclosed in this document relate to an electronic device including a camera module.

### [Background Art]

Various electronic devices, such as smart phones, tablet personal computers (PCs), portable multimedia players (PMPs), personal digital assistants (PDAs), laptop PCs, and wearable devices such as wrist watches and head-mounted displays (HMDs), may include cameras and capture images using cameras.

As the number of users taking photos and videos with electronic devices increases, the performance of cameras included in the electronic devices is also improving. For example, when capturing an image using a camera included in an electronic device, it may be necessary to adjust the focus on a subject or compensate for shaking (e.g., hand shake) that may occur during shooting in order to obtain a clear image.

A camera module used in an electronic device may include an auto focus (AF) function that automatically adjusts the focus of a lens on a subject and/or an optical image stabilizer (OIS) function that compensates for shaking that occurs in a camera module when photographing a subject. The AF function and OIS function of the camera module may be driven based on an electromagnetic force using a magnet and a coil.

The above information may be provided as the related art for the purpose of facilitating the understanding of the disclosure. No assertion or determination is made as to whether any of the above description may be applied as the prior art related to the disclosure.

### [Disclosure of Invention]

### [Technical Problem]

The camera module may include an AF structure used for an auto focus (AF) function that automatically adjusts the focus of a lens on a subject, and an optical image stabilizer (OIS) structure used for an OIS function that compensates for image shake. The AF structure and the OIS structure may be driven based on electromagnetic forces using magnets and coils. The camera module may include an AF actuator including an AF magnet and an AF coil to move the AF structure in substantially an optical axis direction. Further, the camera module may include an OIS actuator including an OIS magnet and an OIS coil to move the OIS structure in a direction substantially perpendicular to the optical axis.

In an embodiment, the camera module may have an AF structure that is an elastic member such as a plate spring or wire. A plurality of AF actuators may be fixed to the AF structure formed of the elastic member. In this case, the plurality of AF actuators may be symmetrically disposed on the AF structure so that the AF structure does not tilt during AF operation. For example, two of at least four AF actuators may be disposed on the elastic member to face each other, and the remaining two AF actuators may be disposed on the elastic member to face each other.

The camera module requires multiple AF actuators to be disposed on the AF structure to prevent the AF structure from tilting, which may increase the volume occupied inside the electronic device due to the multiple AF actuators. Further, the multiple AF actuators may cause magnetic interference with magnetic bodies surrounding the camera module.

Technical problems to be achieved in this document are not limited to the above-described technical problems, and other technical problems that are not described may be clearly understood by those skilled in the art from the description below.

### [Solution to Problem]

According to an embodiment of the disclosure, an electronic device may include a camera module.

The camera module may include a lens unit. Further, the camera module may include an OIS structure configured to move in a direction perpendicular to an optical axis of the lens unit and including a first OIS guide portion and a second OIS guide portion. Further, the camera module may include an AF guide portion configured to face the first OIS guide portion, and an AF structure at least partially disposed inside the OIS structure and configured to move in an optical axis direction of the lens unit. Further, the camera module may include a camera housing configured to cover the OIS structure and the AF structure. Further, the camera module may include a first magnetic body disposed in the first OIS guide portion and at least partially facing the AF guide portion. Further, the camera module may include a second magnetic body disposed in the second OIS guide portion. Further, the camera module may include a first OIS coil configured to face one surface of the first magnetic body and generate an electromagnetic force with the first magnetic body so that the OIS structure moves in a first axial direction perpendicular to the optical axis. Further, the camera module may include a second OIS coil configured to face one surface of the second magnetic body and generate an electromagnetic force with the second magnetic body so that the OIS structure moves in a second axis direction perpendicular to the optical axis and the first axis. Further, the camera module may include an AF coil fixed to the AF guide portion to face the other side of the first magnetic body, and configured to generate an electromagnetic force with the first magnetic body so that the AF structure moves in the optical axis. Further, the camera module may include at least one AF ball disposed between the AF guide portion and the first OIS guide portion. Further, the camera module may include an OIS ball disposed between the camera housing and the OIS structure.

According to an embodiment of the disclosure, a camera assembly may include a first camera module and a second camera module disposed in an electronic device and disposed adjacent to each other. The first camera module may include a lens unit; and an OIS structure configured to move in a direction perpendicular to an optical axis of the lens unit and including a first OIS guide portion, a second OIS guide portion, and an OIS side portion configured to connect the first OIS guide portion and the second OIS guide portion. Further, the first camera module may include an AF guide portion configured to face the first OIS guide portion and positioned inside the OIS structure, and an AF structure at least partially disposed inside the OIS structure and configured to move in an optical axis direction of the lens unit. Further, the first camera module may include a camera housing configured to cover the OIS structure and the AF structure and including an opening in which a portion of the lens unit is positioned. Further, the first camera module may include a first magnetic body disposed on the first OIS guide portion, having at least a portion facing the AF guide portion, and including a polarization region having at least one N pole and at least one S pole on each surface. Further, the first camera module may include a second magnetic body disposed in the second OIS guide portion; and a first OIS coil configured to face one surface of the first magnetic body and generate an electromagnetic force with the first magnetic body so that the OIS structure moves in a first axial direction perpendicular to the optical axis. Further, the first camera module may include a second OIS coil configured to face one surface of the second magnetic body and generate an electromagnetic force with the second magnetic body so that the OIS structure moves in a second axial direction perpendicular to the optical axis and the first axis. Further, the first camera module may include an AF coil fixed to the AF guide portion to face the other surface of the first magnetic body, and configured to generate an electromagnetic force with the first magnetic body so that the AF structure moves in the optical axis. The second camera module may be disposed to face the OIS side portion of the OIS structure.

### [Advantageous Effects of Invention]

According to an embodiment disclosed in this document, a camera module can provide a structure in which an AF structure may move in an optical axis direction through a bearing ball (e.g., AF ball) during an AF operation. For example, the AF structure may move in the optical axis direction through a bearing ball disposed between another structure (e.g., OIS structure) and the AF structure. Further, the camera module may include a first magnetic body used for an AF function and an OIS function and a second magnetic body used only for the OIS function. Accordingly, as the camera module performs the AF function and the OIS function through two magnetic bodies, a surface on which no magnetic body is disposed can be positioned adjacent to other electronic components. Accordingly, magnetic interference occurring between the camera module and other electronic components disposed in an electronic device can be reduced.

Effects that can be obtained from the disclosure are not limited to the above-described effects, and other effects that are not described will be clearly understood by those skilled in the art to which the disclosure belongs from the description below.

### [Brief Description of Drawings]

In connection with the description of the drawings, the same or similar reference numerals may be used for the same or similar components.
FIG. 1 is a block diagram illustrating an electronic device within a network environment according to various embodiments of the disclosure.
FIG. 2 is a block diagram illustrating a camera module according to various embodiments.
FIG. 3 is a projection view illustrating a camera module according to an embodiment of the disclosure.
FIG. 4 is an exploded perspective view illustrating a camera module according to an embodiment of the disclosure.
FIG. 5 is a diagram illustrating a part of a cross-sectional view taken along line A-A of FIG. 3.
FIG. 6A is a perspective view illustrating a combined OIS structure and middle guide according to an embodiment of the disclosure.
FIG. 6B is a perspective view illustrating a combined AF structure and OIS structure according to an embodiment of the disclosure.
FIG. 7A is a diagram illustrating a disposition relationship among a first magnetic body, an AF coil, and a first OIS coil according to an embodiment of the disclosure.
FIG. 7B is a diagram illustrating a disposition relationship between a second magnetic body and a second OIS coil according to an embodiment of the disclosure.
FIG. 8A is a perspective view illustrating an AF structure to which an image sensor and an IR filter are coupled according to an embodiment of the disclosure.
FIG. 8B is a cross-sectional view taken along line B-B of FIG. 8A.
FIG. 9A is a perspective view illustrating a camera module in which a rhomboid prism is disposed between an AF structure and a lens unit according to an embodiment of the disclosure.
FIG. 9B is a cross-sectional view taken along line C-C of FIG. 9A.
FIG. 10 is a diagram illustrating a disposition relationship of a plurality of camera modules according to an embodiment of the disclosure.

### [Mode for the Invention]

In the following description, various embodiments of this document are described with reference to the attached drawings. It should be understood that various embodiments of this document and terms used therein are not intended to limit the technical features described in this document to specific embodiments, but include various modifications, equivalents, or substitutions of the embodiments.

In connection with the description of the drawings, like reference numerals may be used for similar or related components. The singular form of the noun corresponding to the item may include one or more of the item, unless the relevant context clearly dictates otherwise.

In this document, each of phrases such as "A or B", "at least one of A and B", "at least one of A or B", "A, B, or C", "at least one of A, B, and C", and "at least one of A, B, or C" may include any one of or all possible combinations of items listed together in the corresponding one of the phrases. Terms such as "first" or "second" may be simply used for distinguishing a corresponding component from other corresponding components, and do not limit the corresponding components in other aspects (e.g., importance or order). In the case that one (e.g., first) component is referred to as "coupled" or "connected" to another (e.g., second) component, with or without the terms "functionally" or "communicatively", it means that the one component may be connected to the other component directly (e.g., by wire), wirelessly, or through a third component.

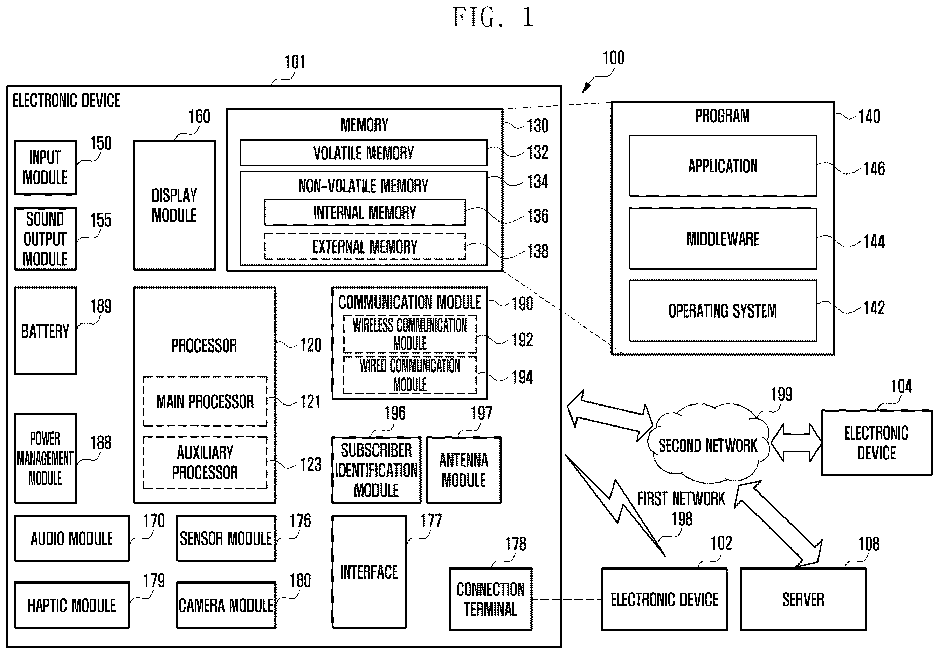

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

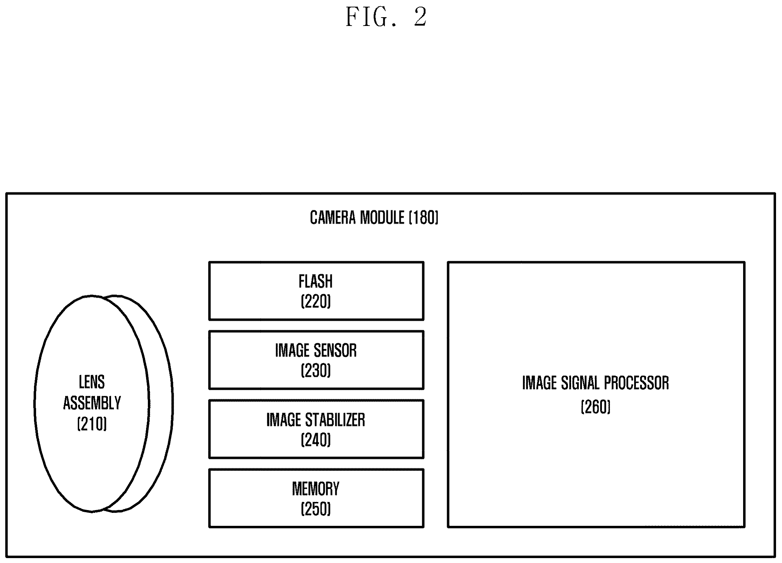

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules 180 may form a rear camera.

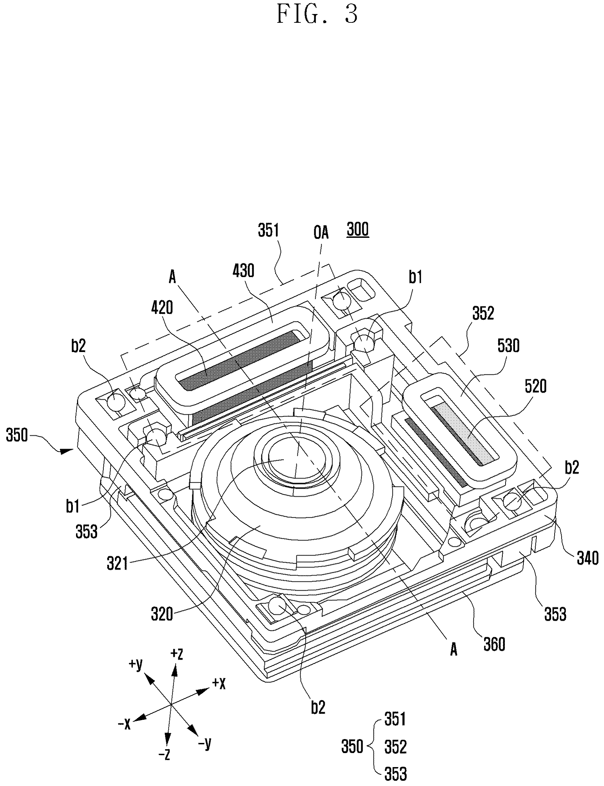

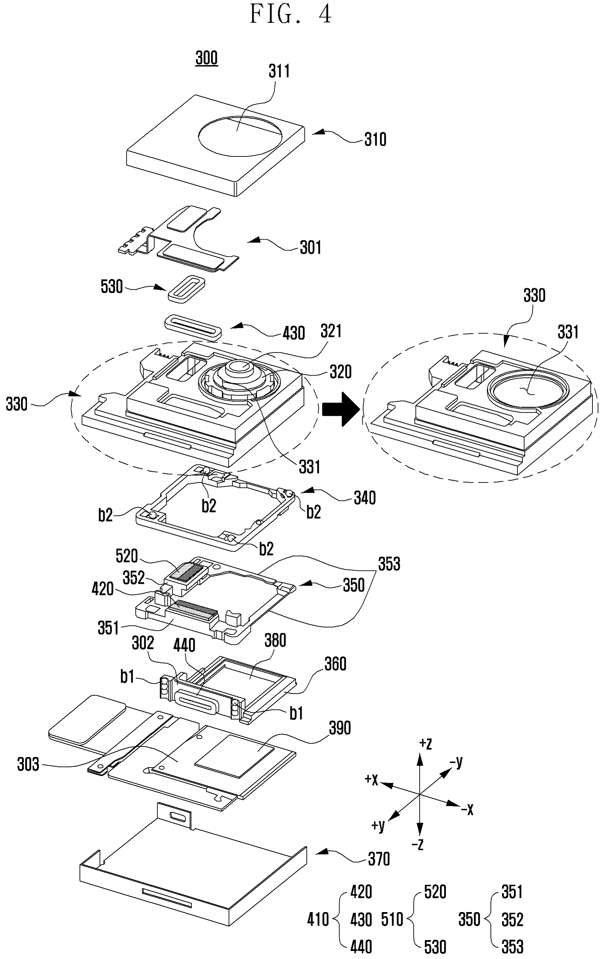

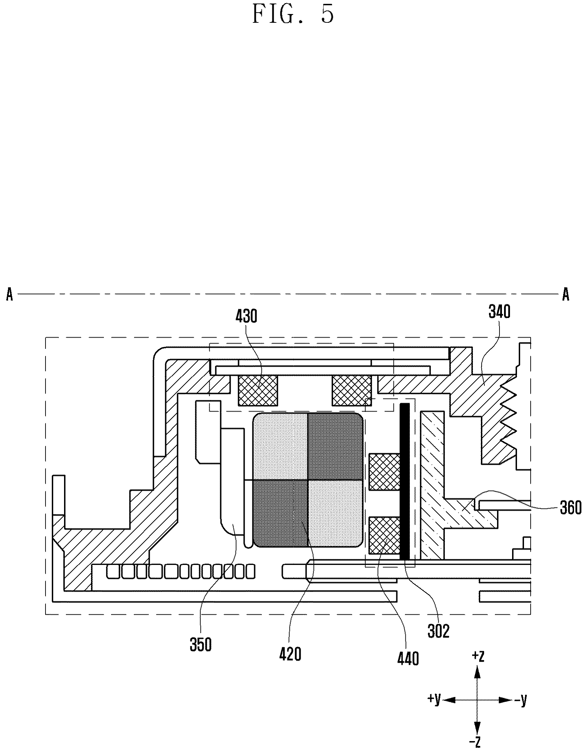

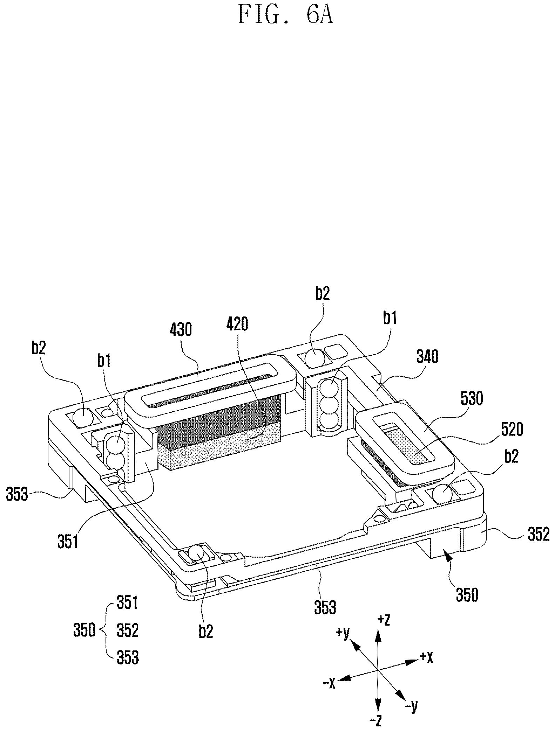

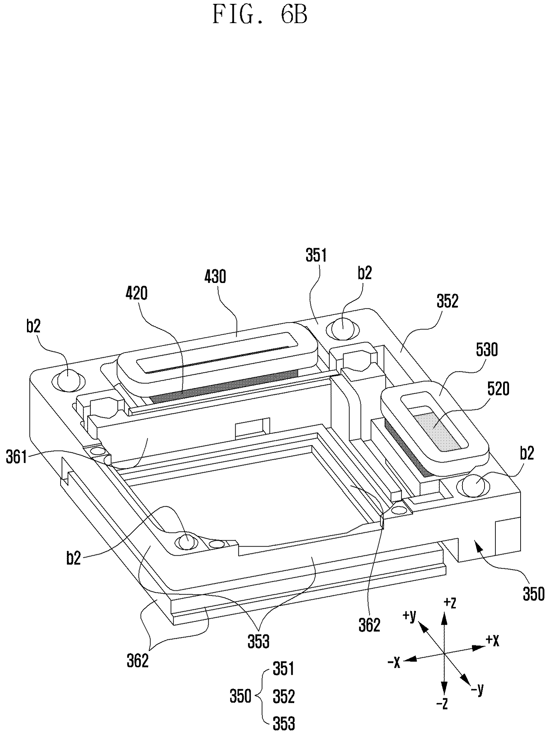

FIG. 3 is a projection view illustrating a camera module according to an embodiment of the disclosure. FIG. 4 is an exploded perspective view illustrating a camera module according to an embodiment of the disclosure. FIG. 5 is a diagram illustrating a part of a cross-sectional view taken along line A-A of FIG. 3. FIG. 6A is a perspective view illustrating a combined OIS structure and middle guide according to an embodiment of the disclosure. FIG. 6B is a perspective view illustrating a combined AF structure and OIS structure according to an embodiment of the disclosure.

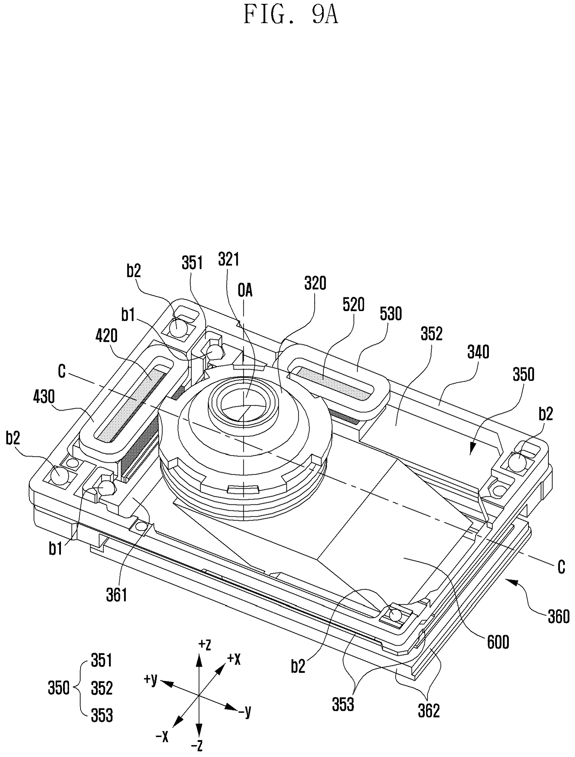

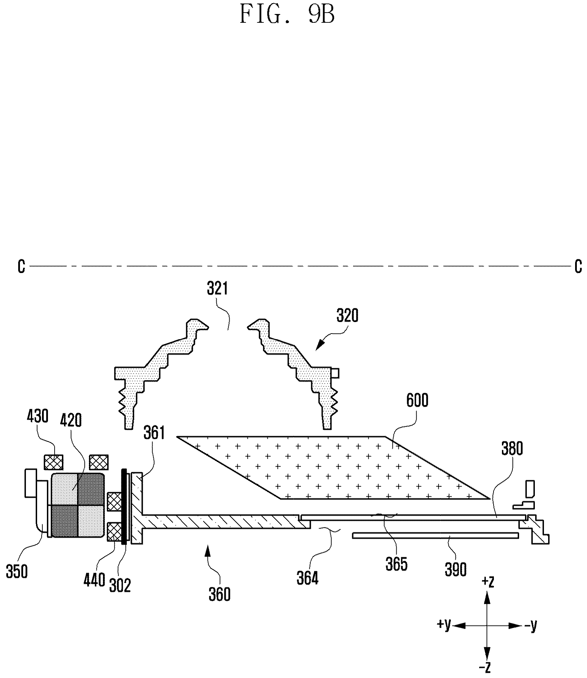

According to an embodiment, as illustrated in FIGS. 3 and 4, a camera module 300 (e.g., the camera module 180 of FIG. 2, a first camera module) may include a shield can 310, a first flexible printed circuit board (FPCB) 301, a lens assembly 320, a camera housing 330, a middle guide 340, an optical image stabilizer (OIS) structure 350, an OIS actuator 510, an auto focus (AF) structure 360, an AF-OIS actuator 410, a second FPCB 302, a third FPCB 303, an image sensor 390, an infrared (IR) filter 380, an AF ball b1, an OIS ball b2, and a camera bracket 370. At least one of the above-described components may be omitted or at least one component may be added. For example, with reference to FIG. 6B to be described later, the camera module 300 may omit the middle guide 340. Further, with reference to FIGS. 9A and 9B to be described later, the camera module 300 may include a rhomboid prism 600.

With reference to FIG. 4, in an embodiment, the camera housing 330 may be disposed to cover the middle guide 340, the OIS structure 350, and the AF structure 360. In an embodiment, the camera housing 330 may be coupled to the camera bracket 370. In this case, the middle guide 340, the OIS structure 350, and the AF structure 360 may be interposed between the camera housing 330 and the camera bracket 370. Accordingly, the camera housing 330 may prevent and protect the OIS structure 350, the middle guide 340, and the AF structure 360 from being displaced or detached due to movement. In an embodiment, the camera housing 330 may include an opening 331 in which at least a portion of the camera module may be positioned.

With reference to FIG. 4, in an embodiment, the shield can 310 may be positioned outside the camera housing 330 and coupled or fitted to the camera housing 330. In an embodiment, the shield can 310 may be positioned at the outermost part of the camera module 300 and surround the camera housing 330, the middle guide 340, the OIS structure 350, and the AF structure 360. In an embodiment, the shield can 310 may block or reduce electromagnetic waves generated from the outside, thereby reducing malfunction of the camera module 300. In an embodiment, the shield can 310 may include an opening 311 that allows the lens unit 321 located in the opening 331 of the camera housing 330 to be exposed to the outside of the camera module 300.

With reference to FIG. 4, in an embodiment, the lens assembly 320 may include at least one lens unit 321 aligned and assembled. The lens assembly 320 may be a lens barrel in which at least one lens unit 321 is assembled. In an embodiment, the lens assembly 320 may be disposed in the camera housing 330. In an embodiment, the lens assembly 320 may be fixed to the camera housing 330. In an embodiment, at least a portion (e.g., the lens unit 321) of the lens assembly 320 may be positioned in the opening 331 of the camera housing 330 and the opening 311 of the shield can 310 to be exposed to the outside of the camera module 300.

With reference to FIG. 4, in an embodiment, when the OIS structure 350 moves along the X-axis and/or Y-axis of FIG. 4 for shake compensation, the middle guide 340 may prevent the OIS structure 350 from rotating.

According to an embodiment, the camera module 300 may perform an AF function of automatically adjusting the focus of the lens unit 321 on a subject by controlling the AF-OIS actuator 410 through the processor 120 (e.g., the processor 120 of FIG. 1) to move the AF structure 360 in substantially the optical axis (e.g., an optical axis OA of FIG. 3) direction. For example, the processor 120 may control the AF-OIS actuator 410 through a driving circuit (e.g., driver IC) (not illustrated) of the camera module 300 to move the AF structure 360 in substantially the optical axis direction, thereby performing an AF function.

In an embodiment, the camera module 300 may perform an optical image stabilizer function by controlling the AF-OIS actuator 410 through the processor 120 to move the OIS structure 350 in a direction substantially perpendicular to the optical axis OA, thereby compensating for image shake. In an embodiment, the electronic device 101 may compensate for image shake by moving the OIS structure 350 in a direction opposite to a shaking direction of the camera module 300. For example, the processor 120 may control the AF-OIS actuator 410 through a driving circuit of the camera module 300 to move the OIS structure 350 in a direction substantially perpendicular to the optical axis OA, thereby performing an optical image stabilizer function.

According to an embodiment, as illustrated in FIGS. 3, 4, and 5, the AF-OIS actuator 410 may include an AF coil 440 disposed in the AF structure 360, a first magnetic body 420 disposed in the OIS structure 350, and a first OIS coil 430 disposed in the camera housing 330. In an embodiment, the AF structure 360 may be moved in substantially the same direction as the optical axis OA direction by an electromagnetic force acting between the first magnetic body 420 and the AF coil 440. Further, the OIS structure 350 may be moved in a direction substantially perpendicular to the optical axis OA by an electromagnetic force acting between the first magnetic body 420 and the first OIS coil 430. In an embodiment, the first OIS coil 430 may face a first surface (e.g., an upper surface, a surface facing the +Z direction with reference to FIG. 4) of the first magnetic body 420. The AF coil 440 may face a second surface (e.g., a side surface, a surface facing the -Y direction with reference to FIG. 4) of the first magnetic body 420.

With reference to FIGS. 3, 4, and 5, in an embodiment, the AF structure 360 may move relative to the OIS structure 350 in the optical axis OA direction (e.g., the Z-axis direction with reference to FIG. 3) of the lens unit 321 via the AF-OIS actuator 410. For example, the AF structure 360 may be coupled to the OIS structure 350 such that at least a portion (e.g., an AF guide portion 361) thereof is positioned inside the OIS structure 350. The AF structure 360 may move in the optical axis OA direction relative to the OIS structure 350 while the OIS structure 350 is fixed in the optical axis OA direction. The AF coil 440 may be electrically connected to the second FPCB 302 disposed on the AF guide portion 361 of the AF structure 360. The processor 120 may control the AF-OIS actuator 410 through a driving circuit (e.g., driver IC) (not illustrated) of the camera module 300. As the processor 120 controls the driving circuit of the camera module 300, a current generated in the driving circuit may be supplied to the AF coil 440 through the second FPCB 302 connected to the driving circuit. Accordingly, an electromagnetic effect may be induced between the AF coil 440 and the first magnetic body 420. In an embodiment, the AF structure 360 may move in the optical axis OA direction by an electromagnetic force acting between the AF coil 440 and the first magnetic body 420 to perform an AF function of automatically adjusting the focus of the lens on a subject.

With reference to FIGS. 3, 4 and 5, in an embodiment, the OIS structure 350 may perform an optical image stabilizer function that compensates for image shake by an electromagnetic force acting between the first OIS coil 430 and the first magnetic body 420.

The first OIS coil 430 may be electrically connected to the first FPCB 301 disposed between the camera housing 330 and the shield can 310. The processor 120 may control the AF-OIS actuator 410 through the driving circuit of the camera module 300. As the processor 120 controls the driving circuit of the camera module 300, a current generated in the driving circuit may be supplied to the first OIS coil 430 through the first FPCB 301 connected to the driving circuit. Accordingly, an electromagnetic effect may be induced between the first OIS coil 430 and the first magnetic body 420. The OIS structure 350 may move in the direction of the first axis (e.g., the Y axis with reference to FIG. 4) perpendicular to the optical axis OA by an electromagnetic force acting between the first OIS coil 430 and the first magnetic body 420 to compensate for image shake.

According to an embodiment, the OIS structure 350 may move relative to the camera housing 330 in a direction substantially perpendicular to the optical axis OA (e.g., the X-axis direction or the Y-axis direction with reference to FIG. 3) with respect to the AF structure 360 via the AF-OIS actuator 410 and the OIS actuator 510. In an embodiment, the camera housing 330 may be a relatively fixed mechanism with respect to the OIS structure 350. As described above, the OIS structure 350 may move in the first axis direction via the AF-OIS actuator 410 to compensate for image shake. In an embodiment, the camera module 300 may control the OIS actuator 510 through the processor 120 to move the OIS structure 350 in the direction of a second axis (e.g., the X-axis in FIG. 4) perpendicular to the first axis to compensate for image shake. The OIS structure 350 may move in the direction of the second axis (e.g., the X-axis direction with reference to FIG. 4) perpendicular to the optical axis and the first axis through the OIS actuator 510 to compensate for image shake. For example, the processor 120 may control the OIS actuator 510 through the driving circuit of the camera module 300 to move the OIS structure 350 in the second axis, thereby performing an optical image stabilizer function.

In an embodiment, the OIS actuator 510 may include a second magnetic body 520 disposed in the OIS structure 350 and a second OIS coil 530 disposed in the camera housing 330. In an embodiment, the second OIS coil 530 may face a first surface (e.g., an upper surface or a surface facing the +Z direction with reference to FIG. 4) of the second magnetic body 520. In an embodiment, the second OIS coil 530 may face a side surface (e.g., a surface facing the +X direction or a surface facing the -X direction with reference to FIG. 4) of the second magnetic body 520. The second OIS coil 530 may be electrically connected to the first FPCB 301. The processor 120 may control the OIS actuator 510 through the driving circuit of the camera module 300. As the processor 120 controls the driving circuit of the camera module 300, a current generated in the driving circuit may be supplied to the second OIS coil 530 through the first FPCB 301 connected to the driving circuit. Accordingly, an electromagnetic effect may be induced between the second OIS coil 530 and the second magnetic body 520. The OIS structure 350 may perform an optical image stabilizer function that compensates for image shake by an electromagnetic force acting between the second OIS coil 530 and the second magnetic body 520. For example, the OIS structure 350 may move in the direction of the second axis (e.g., the X-axis with reference to FIG. 4) perpendicular to the optical axis OA by an electromagnetic force acting between the second OIS coil 530 and the second magnetic body 520, thereby compensating for image shake.

In the above description, the OIS structure 350 has been described as moving in a first axis direction (e.g., the Y-axis direction with reference to FIG. 4) by an electromagnetic force acting between the first OIS coil 430 and the first magnetic body 420, and moving in a second axis direction (the X-axis direction with reference to FIG. 4) by an electromagnetic force acting between the second OIS coil 530 and the second magnetic body 520, but the disclosure is not limited thereto. In an embodiment, the OIS structure 350 may move in the second axis direction by an electromagnetic force acting between the first OIS coil 430 and the first magnetic body 420, and move in the first axis direction by an electromagnetic force acting between the second OIS coil 530 and the second magnetic body 520. In the following description, for convenience of description, it is assumed that the OIS structure 350 moves in the first axial direction through the first OIS coil 430 and the first magnetic body 420, and moves in the second axial direction through the second OIS coil 530 and the second magnetic body 520.

With reference to FIGS. 4, 6A, and 6B, in an embodiment, the OIS structure 350 may include a first OIS guide portion 351 in which the first magnetic body 420 of the AF-OIS actuator 410 is disposed, a second OIS guide portion 352 in which the second magnetic body 520 of the OIS actuator 510 is disposed, and an OIS side portion 353 connecting the first OIS guide portion 351 and the second OIS guide portion 352. As will be described later, the OIS side portion 353 may be an area of the OIS structure 350 in which the AF-OIS actuator 410 and the OIS actuator 510 are not disposed. Another electronic component (e.g., a camera module 701 (second camera module)) (e.g., the camera module 180 of FIG. 1) disposed in the electronic device 101 may be disposed toward the OIS side portion 353 so that magnetic interference by the AF-OIS actuator 410 and the OIS actuator 510 may be reduced.

In an embodiment, the first OIS guide portion 351 may include a groove (not illustrated) in which the first magnetic body 420 is disposed. The first magnetic body 420 may be disposed in the groove of the first OIS guide portion 351 to face the AF coil 440 disposed in the AF guide portion 361 of the AF structure 360. In an embodiment, the groove of the first OIS guide portion 351 may have one surface (e.g., a surface facing the -Y direction with reference to FIG. 4) opened so that the first magnetic body 420 and the AF coil 440 face each other. Further, the groove of the first OIS guide portion 351 may have one surface (e.g., a surface facing the +Z direction with reference to FIG. 4) opened so that the first magnetic body 420 and the first OIS coil 430 disposed in the camera housing 330 face each other. In an embodiment, the second OIS guide portion 352 may include a groove (not illustrated) in which the second magnetic body 520 is disposed. The groove of the second OIS guide portion 352 may have one surface (e.g., a surface facing the +Z direction with reference to FIG. 4) opened so that the second magnetic body 520 and the second OIS coil 530 disposed in the camera housing 330 face each other.

In an embodiment, the first magnetic body 420 and the second magnetic body 520 may be disposed in the OIS structure 350 and move together with the OIS structure 350 in a direction substantially perpendicular to the optical axis OA (e.g., the X-axis direction and/or the Y-axis direction in FIG. 4). In an embodiment, the first magnetic body 420 may be fixed to the first OIS guide portion 351 such that, when the OIS structure 350 moves in the Y-axis direction, the first magnetic body 420 may move in the Y-axis direction relative to the first OIS coil 430 fixed to the camera housing 330. In an embodiment, the second magnetic body 520 may be fixed to the second OIS guide portion 352 such that, when the OIS structure 350 moves in the X-axis direction, the second magnetic body 520 may move in the X-axis direction relative to the second OIS coil 530 fixed to the camera housing 330.

With reference to FIGS. 4, 6A, and 6B, in an embodiment, the AF structure 360 may include an AF guide portion 361 in which the AF coil 440 of the AF-OIS structure 350 is disposed, and an AF side portion 362 surrounding the AF guide portion 361. In an embodiment, the AF structure 360 may be coupled to the OIS structure 350 such that at least a portion thereof is positioned inside the OIS structure 350. With reference to FIG. 6B, in an embodiment, the AF guide portion 361 of the AF structure 360 may be disposed inside the OIS structure 350 to face the first OIS guide portion 351. In an embodiment, a portion of the AF side portion 362 of the AF structure 360 may be disposed inside the OIS structure 350 to face the second OIS guide portion 352. In an embodiment, the AF coil 440 may be fixed to the AF guide portion 361 and face the second surface of the first magnetic body 420 disposed in the first OIS guide portion 351. In an embodiment, when the AF structure 360 moves in the optical axis OA direction by an electromagnetic force acting with the first magnetic body 420, the AF coil 440 may move relative to the OIS structure 350 in the optical axis OA direction together with the AF structure 360.

With reference to FIGS. 4 and 6B, in an embodiment, the AF structure 360 may be positioned at least partially below the OIS structure 350. For example, the AF side portion 362 of the AF structure 360 may be positioned below the OIS side portion 353 of the OIS structure 350. In an embodiment, the AF side portion 362 may be spaced apart from the OIS side portion 353 by a first distance in the -Z direction of FIG. 4. In an embodiment, a first distance may be a distance by which the AF structure 360 may move relative to the OIS structure 350 in the optical axis OA direction of the lens unit 321. In an embodiment, when the AF structure 360 moves in the optical axis OA direction by an electromagnetic force acting between the AF coil 440 and the first magnetic body 420, the AF structure 360 may move relative to the OIS structure 350 within the first distance to automatically adjust the focus of the lens on a subject.

According to an embodiment, as illustrated in FIG. 4, the first FPCB 301 may be disposed between the shield can 310 and the camera housing 330 and be electrically connected to the first OIS coil 430 and the second OIS coil 530. In an embodiment, a current generated in the driving circuit of the camera module 300 through the first FPCB 301 may be supplied to the first OIS coil 430 and the second OIS coil 530. Accordingly, the OIS structure 350 may move in the first and second axis directions substantially perpendicular to the optical axis OA by electromagnetic forces acting between the first magnetic body 420 and the first OIS coil 430, and between the second magnetic body 520 and the second OIS coil 530.

According to an embodiment, as illustrated in FIGS. 4 and 5, the second FPCB 302 may be fixed to the AF guide portion 361 between the AF coil 440 and the AF guide portion 361 and be electrically connected to the AF coil 440. In an embodiment, a current generated in the driving circuit of the camera module 300 may be supplied to the AF coil 440 through the second FPCB 302. Accordingly, the AF structure 360 may move in substantially the same direction as the optical axis OA by an electromagnetic force acting between the first magnetic body 420 and the AF coil 440.

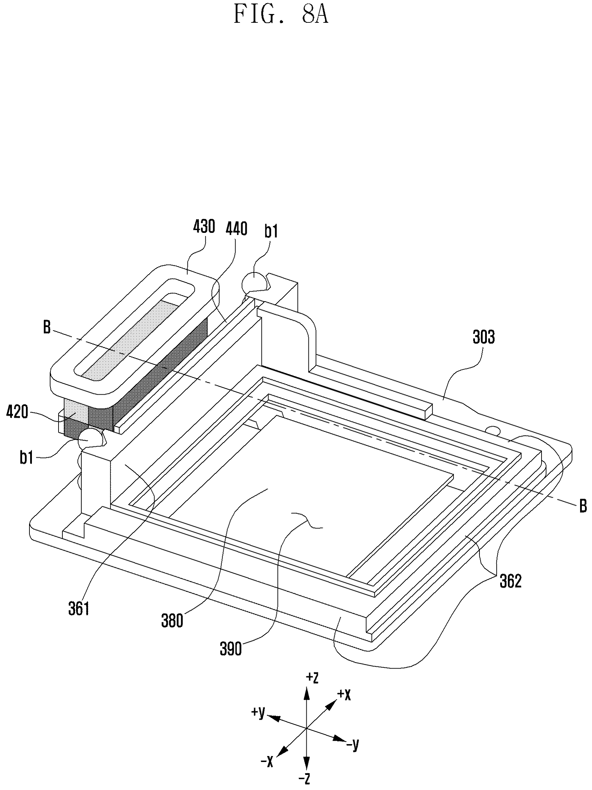

According to an embodiment, with reference to FIG. 4, the third FPCB 303 may be disposed between the AF structure 360 and the camera bracket 370. In an embodiment, with reference to FIG. 8A to be described later, the image sensor 390 may be electrically connected to the third FPCB 303 and disposed on the AF structure 360. In an embodiment, the AF structure 360 may include a first mounting portion 364 on which the image sensor 390 is positioned, and a second mounting portion 365 positioned in an upper side (e.g., the +Z direction with reference to FIG. 8A) of the first mounting portion 364 and on which the IR filter 380 is disposed. In an embodiment, a side surface of the image sensor 390 may be surrounded by the first mounting portion 364.

According to an embodiment, as illustrated in FIGS. 3, 6A, and 6B, at least one AF ball b1 may be disposed between the AF structure 360 and the OIS structure 350. In an embodiment, the AF ball b1 may be a bearing ball. In an embodiment, when the AF structure 360 moves relative to the OIS structure 350 by an electromagnetic force between the first magnetic body 420 and the AF coil 440, the AF ball b1 may guide movement of the AF structure 360 in the optical axis OA direction.

According to an embodiment, the AF ball b1 may be disposed in a first guide groove (not illustrated) formed in at least one of the AF guide portion 361 of the AF structure 360 or the first OIS guide portion 351 of the OIS structure 350. In an embodiment, the first guide groove may be formed in each of the AF guide portion 361 and the first OIS guide portion 351 to form a space in which the AF ball b1 may be disposed. In an embodiment, the first guide grooves may be respectively positioned on both side surfaces of the first magnetic body 420 around the AF-OIS actuator 410 (e.g., both side surfaces in the X-axis direction with reference to FIG. 6B). In an embodiment, the first guide grooves may be formed to extend in substantially the same direction as the optical axis OA. In an embodiment, the AF ball b1 may be arranged in the optical axis OA direction in the first guide groove to guide movement of the AF structure 360 in the optical axis OA direction with respect to the OIS structure 350.

According to an embodiment, as illustrated in FIGS. 6A and 6B, the OIS ball b2 may be disposed between the camera housing 330 and the OIS structure 350. In an embodiment, the OIS ball b2 may be a bearing ball. When the OIS structure 350 moves relative to the camera housing 330 by an electromagnetic force of the AF-OIS actuator 410 and/or the OIS actuator 510, the OIS ball b2 may guide movement of the OIS structure 350. For example, at least one OIS ball b2 may guide movement of the OIS structure 350 in a first axis direction via the AF-OIS actuator 410 and movement of the OIS structure 350 in a second axis direction via the OIS actuator 510.

According to an embodiment, the OIS ball b2 may be disposed in a second guide groove formed in the middle guide 340 or a third guide groove formed in the OIS structure 350.

With reference to FIG. 6A, in an embodiment, the OIS ball b2 may be disposed in a second guide groove (not illustrated) formed in the middle guide 340. With reference to FIG. 6A, in an embodiment, the second guide groove may be formed at four corners of the middle guide 340. In an embodiment, the OIS ball b2 may be disposed in the second guide groove and roll against the camera housing 330 to guide movement of the OIS structure 350 in the first axis direction and/or the second axis direction.

With reference to FIG. 6B, in an embodiment, the camera module 300 may not include a middle guide 340. In this case, the OIS ball b2 may be disposed in a third guide groove (not illustrated) formed in the OIS structure 350. With reference to FIG. 6B, in an embodiment, the third guide groove may be formed at positions corresponding to four corners of the OIS structure 350. In an embodiment, the OIS ball b2 may be disposed in the third guide groove and roll against the camera housing 330 to guide movement of the OIS structure 350 in the first axis direction and/or the second axis direction.

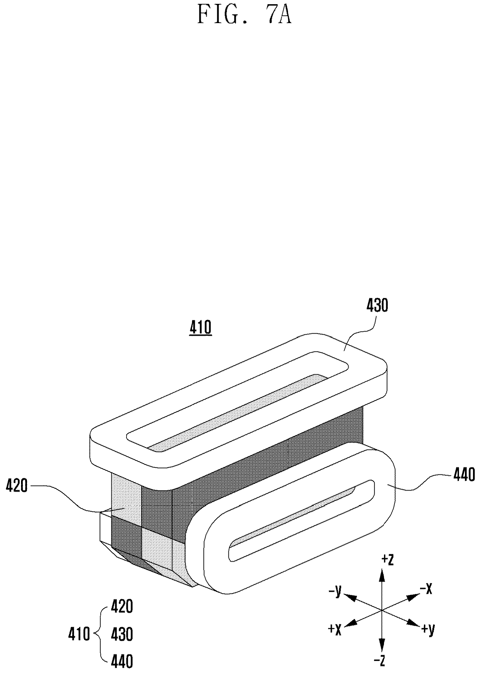

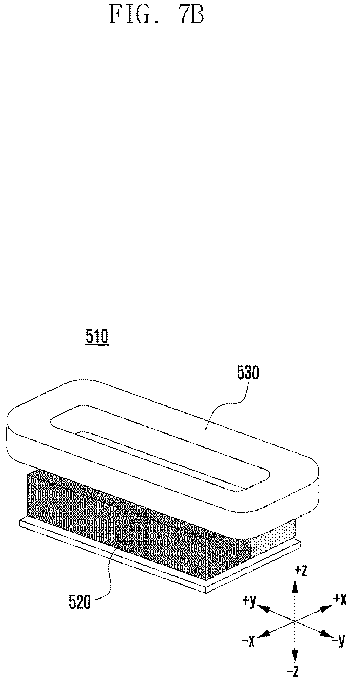

FIG. 7A is a diagram illustrating a disposition relationship among a first magnetic body, an AF coil, and a first OIS coil according to an embodiment of the disclosure. FIG. 7B is a diagram illustrating a disposition relationship between a second magnetic body and a second OIS coil according to an embodiment of the disclosure.

According to an embodiment, as described above, the camera module 300 (e.g., the camera module 180 of FIG. 2) may automatically adjust the focus of a subject by moving the AF structure 360 in substantially the same direction as the optical axis OA direction (e.g., the Z-axis direction with reference to FIG. 3) through the first magnetic body 420 and the AF coil 440. Further, the camera module 300 may compensate for image shake by moving the OIS structure 350 in a first axis (e.g., the Y-axis direction with reference to FIG. 5) perpendicular to the optical axis OA direction through the first magnetic body 420 and the first OIS coil 430.

According to an embodiment, as illustrated in FIG. 7A, the first magnetic body 420 may be a magnet including at least two N poles and at least two S poles. In an embodiment, the first magnetic body 420 may include a polarization region having at least one N pole and at least one S pole on each surface. In an embodiment, each surface of the first magnetic body 420 may have an N pole and an S pole arranged thereon. For example, a first surface (e.g., a surface facing the +Z direction with reference to FIG. 4) and a second surface (e.g., a surface facing the -Y direction with reference to FIG. 4) of the first magnetic body 420 may have an N pole and an S pole positioned thereon, respectively. In an embodiment, the first OIS coil 430 may be fixed to the camera housing 330 to face different poles (N, S poles) positioned on the first surface of the first magnetic body 420. Accordingly, the OIS structure 350 may move in the first axis (e.g., the Y-axis direction with reference to FIG. 4) perpendicular to the optical axis OA by an electromagnetic force acting between the first OIS coil 430 and the first magnetic body 420 to compensate for image shake. Further, in an embodiment, the AF coil 440 may be fixed to the AF guide portion 361 to face different poles (N, S poles) located on the second surface of the first magnetic body 420. Therefore, the AF structure 360 may move relative to the OIS structure 350 in substantially the same direction as the optical axis OA by an electromagnetic force acting between the AF coil 440 and the first magnetic body 420 to adjust the focus of the subject.

According to an embodiment, as illustrated in FIG. 7B, the second magnetic body 520 may be a single magnet including an N pole and an S pole. In an embodiment, the second OIS coil 530 may be fixed to the camera housing 330 and face the first surface of the second magnetic body 520. Accordingly, the OIS structure 350 may move in a second axis (e.g., the X-axis direction with reference to FIG. 4) perpendicular to the optical axis OA by an electromagnetic force acting between the second OIS coil 530 and the second magnetic body 520, thereby compensating for image shake.

According to an embodiment, the AF-OIS actuator 410 may further include, in addition to the first magnetic body 420 and the AF coil 440, an AF magnet insert yoke (not illustrated), an AF back yoke (not illustrated), at least one AF magnet detection sensor (not illustrated), a first OIS magnet insert yoke (not illustrated), a first OIS back yoke (not illustrated), and at least one first OIS magnet detection sensor (not illustrated).

In an embodiment, the AF magnet insert yoke and the AF back yoke may prevent magnetic flux of the first magnetic body 420 from leaking. In an embodiment, as the first magnetic body 420 and the AF coil 440 are disposed between the AF magnet insert yoke and the AF back yoke, an electromagnetic force may be concentrated between the first magnetic body 420 and the AF coil 440. In an embodiment, at least one of the AF magnet insert yoke or the AF back yoke may be disposed on a third surface (e.g., a surface facing the +Y direction with reference to FIG. 5) opposite to the second surface of the first magnetic body 420, and the other one may be disposed on the AF guide portion 361 between the AF coil 440 and the AF guide portion 361.

In an embodiment, the AF magnet detection sensor may be disposed in the AF coil 440. For example, the AF magnet detection sensor may be disposed at the center of the AF coil 440. In an embodiment, the AF magnet detection sensor may detect the position of the first magnetic body 420. For example, the AF magnet detection sensor may include at least one driving IC (not illustrated). The driving IC (not illustrated) may control a current passing through the AF coil 440 to change an electromagnetic force between the first magnetic body 420 and the AF coil 440, thereby controlling the AF structure 360 to move along the optical axis OA direction.

In an embodiment, the first OIS magnet insert yoke and the first OIS back yoke may prevent magnetic flux of the first magnetic body 420 from leaking. In an embodiment, as the first magnetic body 420 and the first OIS coil 430 are disposed between the first OIS magnet insert yoke and the first OIS back yoke, an electromagnetic force may be concentrated between the first magnetic body 420 and the first OIS coil 430. In an embodiment, at least one of the first OIS magnet insert yoke or the first OIS back yoke may be disposed on a fourth surface (e.g., a surface facing the -Z direction with reference to FIG. 5) of the first magnetic body 420 opposite to the first surface, and the other one may be disposed in the camera housing 330 between the first OIS coil 430 and the camera housing 330.

In an embodiment, the first OIS magnet detection sensor may be disposed on the first OIS coil 430. For example, the first OIS magnet detection sensor may be disposed at the center of the first OIS coil 430. In an embodiment, the first OIS magnet detection sensor may detect the position of the first magnetic body 420. For example, the first OIS magnet detection sensor may include at least one driving IC (not illustrated). The driving IC (not illustrated) may control a current passing through the first OIS coil 430 to change an electromagnetic force between the first magnetic body 420 and the first OIS coil 430, thereby controlling the OIS structure 350 to move along a first axis direction (e.g., the Y-axis direction with reference to FIG. 4).

In an embodiment, the OIS actuator 510 may further include, in addition to the second magnetic body 520 and the second OIS coil 530, a second OIS magnet insert yoke (not illustrated), a second OIS back yoke (not illustrated), and at least one second OIS magnet detection sensor (not illustrated).

In an embodiment, the second OIS magnet insert yoke and the second OIS back yoke may prevent magnetic flux of the second magnetic body 520 from leaking. In an embodiment, as the second magnetic body 520 and the second OIS coil 530 are disposed between the second OIS magnet insert yoke and the second OIS back yoke, an electromagnetic force may be concentrated between the second magnetic body 520 and the second OIS coil 530. In an embodiment, at least one of the second OIS magnet insert yoke or the second OIS back yoke may be disposed on a surface (e.g., a surface facing the -Z direction with reference to FIG. 3) of the second magnetic body 520 opposite to a first surface (e.g., a surface facing the +Z direction with reference to FIG. 3), and the other one may be disposed in the camera housing 330 between the second OIS coil 530 and the camera housing 330.

In an embodiment, the second OIS magnet detection sensor may be disposed on the second OIS coil 530. For example, the second OIS magnet detection sensor may be disposed at the center of the second OIS coil 530. In an embodiment, the second OIS magnet detection sensor may detect the position of the second magnetic body 520. For example, the second OIS magnet detection sensor may include at least one driving IC (not illustrated). The driving IC (not illustrated) may control a current passing through the second OIS coil 530 to change an electromagnetic force between the second magnetic body 520 and the second OIS coil 530, thereby controlling the OIS structure 350 to move along the second axis direction (e.g., the X-axis direction with reference to FIG. 4).

According to an embodiment, the AF-OIS actuator 410 and the OIS actuator 510 disclosed in this document are not limited to the forms of the first magnetic body 420, the second magnetic body 520, the AF coil 440, the first OIS coil 430, and the second OIS coil 530 illustrated in FIGS. 7A and 7B. In an embodiment, the AF-OIS actuator 410 and the OIS actuator 510 may be driven by a solenoid force. In an embodiment, the AF coil 440, the first OIS coil 430, and/or the second OIS coil 530 may be formed as multi-turn coils (e.g., cylindrical coil). In an embodiment, the AF structure 360 may move in substantially the same direction to the optical axis OA to automatically adjust the focus on a subject by using a solenoid force acting between the first magnetic body 420 and the multi-turn AF coil 440. In an embodiment, the OIS structure 350 may move in a first axis (e.g., the Y-axis with reference to FIG. 4) direction by using a solenoid force acting between the first magnetic body 420 and the multi-turn first OIS coil 430 to compensate for image shake. Further, the OIS structure 350 may move in a second axis (e.g., the X-axis with reference to FIG. 4) direction by using a solenoid force acting between the second magnetic body 520 and the multi-turn second OIS coil 530 to compensate for image shake.

According to an embodiment, although the above description has been made on the assumption that the first OIS coil 430 and the second OIS coil 530 are fixed to the camera housing 330, the disclosure may not be limited thereto. For example, the first OIS coil 430 may be disposed on a mechanism whose position is relatively fixed with respect to the first magnetic body 420 fixed to the OIS structure 350. Similarly, the second OIS coil 530 may be disposed on a mechanism whose position is relatively fixed with respect to the second magnetic body 520 fixed to the OIS structure 350. In an embodiment, the mechanism may be a mechanism that does not move in the first axis and/or the second axis when the OIS structure 350 moves in the first axis and/or second axis direction. For example, the mechanism may be a camera bracket 370.

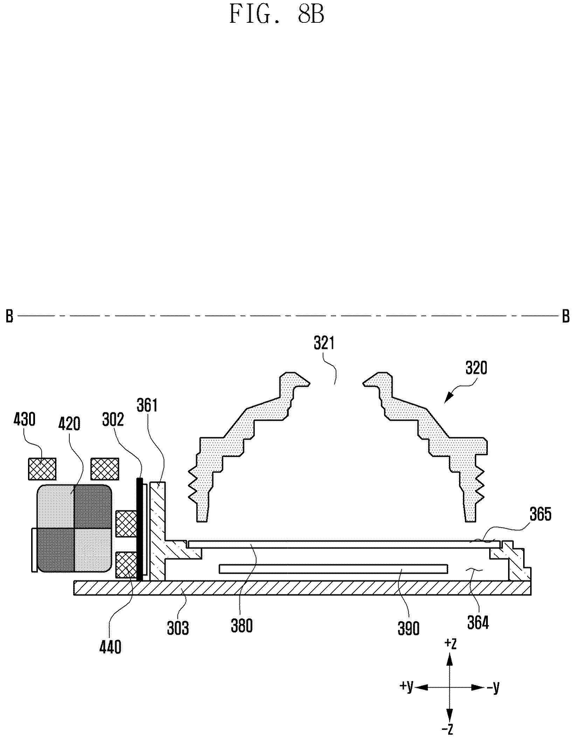

FIG. 8A is a perspective view illustrating an AF structure to which an image sensor and an IR filter are coupled according to an embodiment of the disclosure. FIG. 8B is a cross-sectional view taken along line B-B of FIG. 8A.

According to an embodiment, as illustrated in FIG. 8A, the image sensor 390 may be electrically connected to the third FPCB 303 and disposed in the AF structure 360. As described above, the AF structure 360 may include a first mounting portion 364 in which the image sensor 390 is positioned. In an embodiment, the third FPCB 303 may be coupled to the AF structure 360 such that the image sensor 390 is fixed in position in the first mounting portion 364 of the AF structure 360. Accordingly, the image sensor 390 may move in the optical axis OA direction (e.g., the Z-axis with reference to FIG. 3) together with the AF structure 360 through the AF-OIS actuator 410 to adjust the focus of the subject. In an embodiment, as the AF guide portion 361 is positioned inside the OIS structure 350, the AF structure 360 may move in the first axis (e.g., the Y-axis with reference to FIG. 4) and the second axis (e.g., the X-axis with reference to FIG. 4) together with the OIS structure 350 through the AF-OIS actuator 410 and the OIS actuator 510. Accordingly, the image sensor 390, which is fixed to the AF structure 360, move in the first axis and the second axis to compensate for image shake.

In an embodiment, the IR filter 380 facing the image sensor 390 may be fixed to the AF structure 360. In an embodiment, the IR filter 380 may be a filter that selectively reflects or absorbs near-infrared wavelengths to block them from entering the image sensor 390. In an embodiment, the IR filter 380 may be formed in the AF structure 360 and be disposed in the second mounting portion 365 located above the first mounting portion 364 (e.g., the +Z direction with reference to FIG. 8A). In an embodiment, the IR filter 380 may be disposed between the lens unit 321 and the image sensor 390 to face the lens unit 321. In an embodiment, the camera module 300 (e.g., the camera module 180 of FIG. 2) may have a reduced module thickness in the Z-axis direction of FIG. 8B, as the second mounting portion 365 in which the IR filter 380 is disposed on the AF structure 360 is formed, compared to the case where the IR filter 380 is disposed in the AF structure 360 through a separate bracket.

In an embodiment, the AF structure 360 may have the AF guide portion 361 and a portion of the AF side portion 362 positioned inside the OIS structure 350. For example, the AF guide portion 361 may face the first OIS guide portion 351 inside the OIS structure 350, and a portion of the AF side portion 362 may face the second OIS guide portion 352 inside the OIS structure 350. While the AF guide portion 361 and a portion of the AF side portion 362 are positioned inside the OIS structure 350, the AF structure 360 may move relative to the OIS structure 350 in the optical axis OA direction.

In an embodiment, the AF side portion 362 of the AF structure 360 may be positioned below the OIS side portion 353 of the OIS structure 350. In an embodiment, the AF side portion 362 may be spaced apart from the OIS side portion 353 by a first distance in the -Z direction of FIG. 4. In an embodiment, the first distance may be a distance by which the AF structure 360 may move relative to the OIS structure 350 in the optical axis OA direction of the lens unit 321. In an embodiment, when the AF structure 360 moves in the optical axis OA direction by an electromagnetic force acting between the AF coil 440 and the first magnetic body 420, the AF structure 360 may move relative to the OIS structure 350 within the first distance, thereby automatically adjusting the focus of the lens on the subject. Accordingly, when the AF structure 360 moves in the optical axis OA direction so as to adjust the focus of the subject, the OIS structure 350 may not move in the optical axis OA direction. Thus, a gap between the first magnetic body 420 disposed in the OIS structure 350 and the first OIS coil 430 disposed in the camera housing 330, and a gap between the second magnetic body 520 disposed in the OIS structure 350 and the second OIS coil 530 disposed in the camera housing 330, may be maintained constant regardless of the movement of the AF structure 360.

FIG. 9A is a perspective view illustrating a camera module in which a rhomboid prism is disposed between an AF structure and a lens unit according to an embodiment of the disclosure. FIG. 9B is a cross-sectional view taken along line C-C of FIG. 9A.

According to an embodiment, as illustrated in FIGS. 9A and 9B, the camera module 300 (e.g., the camera module 180 of FIG. 2) may include a rhomboid prism 600 disposed in the AF structure 360. In an embodiment, the rhomboid prism 600 may be a parallelepiped-shaped prism. In an embodiment, at least a portion of the rhomboid prism 600 may be disposed in the AF structure 360 and positioned between the image sensor 390 and the lens unit 321. In an embodiment, the lens unit 321 and the rhomboid prism 600 may be fixed to the camera housing 330. The image sensor 390 may be fixed to the AF structure 360 and move relative to the lens unit 321 and the rhomboid prism 600 in the optical axis direction, the first axis direction, and/or the second axis direction via the AF-OIS actuator and the OIS actuator.

In an embodiment, light incident on the rhomboid prism 600 through the lens unit 321 of the lens assembly 320 may have substantially the same incident and exit directions. The light incident on the lens unit 321 may be reflected inside the rhomboid prism 600 and, after exiting the rhomboid prism, the light may be transferred to the image sensor 390.

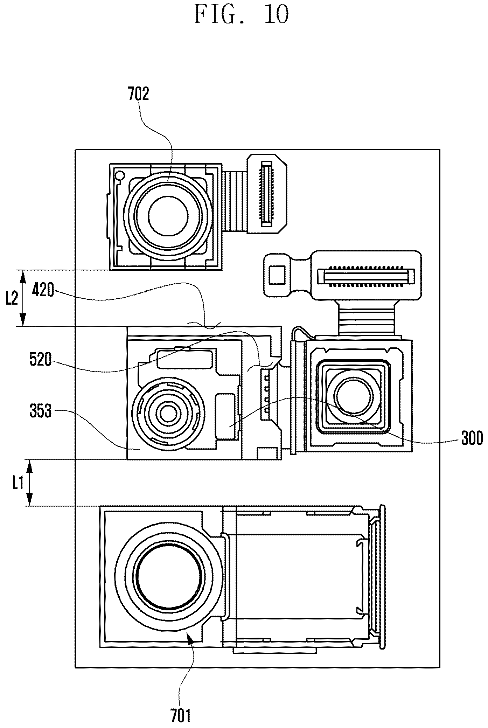

FIG. 10 is a diagram illustrating a disposition relationship of a plurality of camera modules according to an embodiment of the disclosure.

According to an embodiment, as illustrated in FIG. 10, the electronic device 101 may include at least one other camera module 701 (e.g., second camera module) positioned adjacent to the camera module 300. In an embodiment, the other camera module 701 may be disposed around the camera module 300 so as not to be adjacent to the first magnetic body 420 and/or the second magnetic body 520 disposed in the camera module 300. In an embodiment, the other camera module 701 may be disposed to face the OIS side portion 353 of the OIS structure 350 in which the first magnetic body 420 and the second magnetic body 520 are not disposed.

According to an embodiment of the disclosure, the camera module 300 may include a first magnetic body 420 used for an AF function and an OIS function and a second magnetic body 520 used only for an OIS function. In an embodiment, as the camera module 300 performs the AF function and the OIS function through the first magnetic body 420 and the second magnetic body 520, a surface in which no magnetic body is disposed (e.g., the OIS side portion 353) may be positioned adjacent to the other electronic component (e.g., the camera module 701). Accordingly, magnetic interference occurring between the camera module 300 and the other electronic component disposed in the electronic device 101 may be reduced. Accordingly, the degree of freedom in the disposition structure of the other electronic component with respect to the camera module 300 may be increased. Further, in the case where the other electronic component 701 is positioned adjacent to a surface of the camera module 300 in which no magnetic body (e.g., the first magnetic body 420 and/or the second magnetic body 520) is disposed, magnetic interference between the camera module 300 and the other electronic component is reduced, so that a separation distance L1 between the camera module 300 and the other electronic component may be decreased, thereby reducing the disposition space of the electronic component. For example, the separation distance L1 between the other electronic component and the camera module 300 may be smaller than a separation distance L2 between the other electronic component (e.g., a camera module 720) disposed adjacent to the first magnetic body 420 of the camera module 300 and the camera module 300.

According to embodiments, the electronic device 101 may have a bar-type or plate-type appearance, but is not limited thereto. For example, the illustrated electronic device 101 may be a part of a foldable electronic device, a slidable electronic device, a stretchable electronic device, and/or a rollable electronic device. The terms "foldable electronic device," "slidable electronic device," "stretchable electronic device," and/or "rollable electronic device" may refer to an electronic device having a display (e.g., the display module 160 of FIG. 1) capable of bending deformation, such that at least a portion of the display may be folded, wound or rolled, at least partially expanded, and/or accommodated within the housing. The foldable electronic device, slidable electronic device, stretchable electronic device, and/or rollable electronic device may allow a user to expand a screen display area by unfolding the display or exposing a wider portion of the display to the outside, according to the user's needs.

An electronic device according to various embodiments disclosed in this document may be various types of devices. The electronic device may include, for example, a portable communication device (e.g., smart phone), a computer device, a portable multimedia device, a portable medical device, a camera, a wearable device, or a home appliance device. The electronic device according to the embodiment of this document is not limited to the above-described devices.

It should be understood that various embodiments of this document and terms used therein are not intended to limit the technical features described in this document to specific embodiments, but include various modifications, equivalents, or substitutions of the embodiments. In connection with the description of the drawings, like reference numerals may be used for similar or related components. The singular form of the noun corresponding to the item may include one or more of the item, unless the relevant context clearly dictates otherwise. In this document, each of phrases such as "A or B", "at least one of A and B", "at least one of A or B", "A, B, or C", "at least one of A, B, and C", and "at least one of A, B, or C" may include any one of or all possible combinations of items listed together in the corresponding one of the phrases. Terms such as "first" or "second" may be simply used for distinguishing a corresponding component from other corresponding components, and do not limit the corresponding components in other aspects (e.g., importance or order). In the case that one (e.g., first) component is referred to as "coupled" or "connected" to another (e.g., second) component, with or without the terms "functionally" or "communicatively", it means that the one component may be connected to the other component directly (e.g., by wire), wirelessly, or through a third component.

The term "module" used in various embodiments of this document may include a unit implemented in hardware, software, or firmware, and may be used interchangeably with terms such as logic, logic block, component, or circuit. The module may be an integrally formed component, or a minimum unit or a portion of the component that performs one or more functions. For example, according to an embodiment, the module may be implemented in the form of an application-specific integrated circuit (ASIC).

Various embodiments of this document may be implemented into software (e.g., the program 140) including one or more instructions stored in a storage medium (e.g., the internal memory 136 or the external memory 138) readable by a machine (e.g., the electronic device 101). For example, the processor (e.g., the processor 120) of the device (e.g., the electronic device 101) may call and execute at least one instruction from one or more instructions stored in a storage medium. This makes it possible for the machine to be operated to perform at least one function according to the called at least one instruction. The one or more instructions may include a code generated by a compiler or a code executable by an interpreter. The machine readable storage medium may be provided in the form of a non-transitory storage medium. Here, 'non-transitory' only means that the storage medium is a tangible device and does not include a signal (e.g., electromagnetic wave), and this term does not distinguish the case that data is semi-permanently stored in the storage medium and the case that data is temporarily stored.

According to an embodiment, a method according to various embodiments disclosed in this document may be included and provided in a computer program product. Computer program products may be traded between sellers and buyers as commodities. The computer program product may be distributed in the form of a machine readable storage medium (e.g., compact disc read only memory (CD-ROM)), or may be distributed (e.g., download or upload) via an application store (e.g., Play Store^{™}) or online or directly between two user devices (e.g., smartphones). In the case of online distribution, at least a part of the computer program product may be at least temporarily stored or temporarily generated in a machine readable storage medium such as a memory of a server of a manufacturer, a server of an application store, or a relay server.

According to various embodiments, each component (e.g., module or program) of the above-described components may include a singular entity or a plurality of entities, and some of the plurality of entities may be separately disposed in other components. According to various embodiments, one or more components or operations among the above-described corresponding components may be omitted, or one or more other components or operations may be added. Alternatively or additionally, a plurality of components (e.g., module or program) may be integrated into one component. In this case, the integrated component may perform one or more functions of each of the plurality of components identically or similarly to the functions performed by the corresponding component among the plurality of components prior to the integration. According to various embodiments, operations performed by a module, program, or other component may be executed sequentially, in parallel, repeatedly, or heuristically, or one or more of the operations may be executed in a different order, or omitted, or one or more other operations may be added.

It will be understood that the disclosure contemplates and includes, in addition to the above-disclosed embodiments, embodiments based on combinations of any two or more of the above-disclosed embodiments and embodiments including any combination of the above features. That is, the absence of explicit indication that two features may be combined or two embodiments may be combined does not mean that such combinations are not contemplated, but such combinations should be regarded as included herein.

According to an embodiment of the disclosure, an electronic device 101 including a camera module 180, 300, or 701, wherein the camera module may include a lens unit 321; an OIS structure 350 configured to move in a direction perpendicular to an optical axis OA of the lens unit and including a first OIS guide portion 351 and a second OIS guide portion 352; an AF structure 360 including an AF guide portion 361 facing the first OIS guide portion, having at least a portion disposed inside the OIS structure, and configured to move in an optical axis direction of the lens unit; a camera housing 330 configured to cover the OIS structure and the AF structure; a first magnetic body 420 disposed in the first OIS guide portion and having at least a portion facing the AF guide portion; a second magnetic body 520 disposed in the second OIS guide portion; a first OIS coil 430 configured to face one surface of the first magnetic body and generate an electromagnetic force with the first magnetic body so that the OIS structure moves in a first axial direction perpendicular to the optical axis; a second OIS coil 530 configured to face one surface of the second magnetic body and generate an electromagnetic force with the second magnetic body so that the OIS structure moves in a second axis direction perpendicular to the optical axis and the first axis; an AF coil 440 fixed to the AF guide portion to face the other surface of the first magnetic body, and configure to generate an electromagnetic force with the first magnetic body so that the AF structure moves along the optical axis; at least one AF ball b1 disposed between the AF guide portion and the first OIS guide portion; and an OIS ball b2 disposed between the camera housing and the OIS structure.

Further, the AF guide portion may be positioned inside the OIS structure.

Further, the AF structure may move relative to the OIS structure in the optical axis direction.

Further, the OIS structure may include an OIS side portion 353 configured to connect the first OIS guide portion and the second OIS guide portion, and the AF structure may include an AF side portion 362 spaced apart from the OIS side portion by a first distance in a lower portion of the OIS side portion, and be movable relative to the OIS structure in the optical axis direction by the first distance.

Further, the first OIS coil and the second OIS coil may be fixed to the camera housing.

Further, the camera module may further include a first FPCB 301 configured to transfer a current generated in a driving circuit thereof to the first OIS coil and the second OIS coil.

Further, the camera module may further include a second FPCB 302 configured to transfer a current generated in the driving circuit thereof to the AF coil.

Further, the camera module may further include an image sensor 390 disposed in the AF structure and electrically connected to a third FPCB 303 of the electronic device; and an infrared (IR) filter 380 disposed in the AF structure so as to cover the image sensor and configured to face the lens unit.

Further, the AF structure may include a first mounting portion 364 in which the image sensor is positioned and a second mounting portion 365 formed in an upper side of the first mounting portion and in which the IR filter is disposed.

Further, the first OIS coil may face a first surface of the first magnetic body, the second OIS coil may face a first surface of the second magnetic body, and the AF coil may face a second surface perpendicular to the first surface of the first magnetic body.

Further, the first magnetic body may include a polarized region having at least one N pole and at least one S pole on each surface.

Further, the electronic device may include a first guide groove formed in at least one of the AF guide portion or the first OIS guide portion and in which the AF ball is disposed.

Further, the camera module may further include a middle guide 340 coupled with the OIS structure between the camera housing and the OIS structure, and the middle guide may include a second guide groove in which the OIS ball is seated.

Further, the OIS structure may include a third guide groove in which the OIS ball is disposed.

Further, the camera module may further include a rhomboid prism 600 disposed in the AF structure and having at least a portion facing the lens unit.

Further, the electronic device may further include at least one camera module 701 configured to face the OIS side portion of the OIS structure.

Further, the first OIS guide portion may include a first groove in which the first magnetic body is disposed, and the second OIS guide portion may include a second groove in which the second magnetic body is disposed.

According to an embodiment of the disclosure, a camera assembly including a first camera module 300 and a second camera module 701 disposed in an electronic device 101 and disposed adjacent to each other, wherein the first camera module may include a lens unit 321; an OIS structure 350 configured to move in a direction perpendicular to an optical axis OA of the lens unit and including a first OIS guide portion 351, a second OIS guide portion 352, and an OIS side portion 353 configured to connect the first OIS guide portion and the second OIS guide portion;

an AF structure 360 including an AF guide portion 361 facing the first OIS guide portion and positioned inside the OIS structure and having at least a portion disposed inside the OIS structure and configured to move in an optical axis direction of the lens unit; a camera housing 330 configured to cover the OIS structure and the AF structure and including an opening 331 in which a portion of the lens unit is positioned; a first magnetic body 420 disposed in the first OIS guide portion, having at least a portion facing the AF guide portion, and including a polarization region having at least one N pole and at least one S pole on each surface; a second magnetic body 520 disposed in the second OIS guide portion; a first OIS coil 430 configured to face one surface of the first magnetic body and configured to generate an electromagnetic force with the first magnetic body so that the OIS structure moves in a first axial direction perpendicular to the optical axis; a second OIS coil 530 configured to face one surface of the second magnetic body and generate an electromagnetic force with the second magnetic body so that the OIS structure moves in a second axial direction perpendicular to the optical axis and the first axis; and an AF coil 440 fixed to the AF guide portion to face the other side of the first magnetic body and configured to generate an electromagnetic force with the first magnetic body so that the AF structure moves along the optical axis, wherein the second camera module may be disposed to face the OIS side surface of the OIS structure.

Further, the AF structure may include an AF side portion 362 spaced apart from the OIS side portion by a first distance in a lower portion of the OIS side portion, and be movable relative to the OIS structure in the optical axis direction by the first distance.

Further, the electronic device may include at least one AF ball b1 disposed between the AF guide portion and the first OIS guide portion, and an OIS ball b2 disposed between the camera housing and the OIS structure.

## Claims

1. An electronic device 101 including a camera module 180, 300, or 701, wherein
the camera module comprises:
a lens unit 321;
an OIS structure 350 configured to move in a direction perpendicular to an optical axis OA of the lens unit and including a first OIS guide portion 351 and a second OIS guide portion 352;
an AF structure 360 including an AF guide portion 361 facing the first OIS guide portion, having at least a portion disposed inside the OIS structure, and configured to move in an optical axis direction of the lens unit;
a camera housing 330 configured to cover the OIS structure and the AF structure;
a first magnetic body 420 disposed in the first OIS guide portion and having at least a portion facing the AF guide portion;
a second magnetic body 520 disposed in the second OIS guide portion;
a first OIS coil 430 configured to face one surface of the first magnetic body and generate an electromagnetic force with the first magnetic body so that the OIS structure moves in a first axial direction perpendicular to the optical axis;
a second OIS coil 530 configured to face one surface of the second magnetic body and generate an electromagnetic force with the second magnetic body so that the OIS structure moves in a second axis direction perpendicular to the optical axis and the first axis;
an AF coil 440 fixed to the AF guide portion to face the other surface of the first magnetic body, and configured to generate an electromagnetic force with the first magnetic body so that the AF structure moves along the optical axis;
at least one AF ball b1 disposed between the AF guide portion and the first OIS guide portion; and
an OIS ball b2 disposed between the camera housing and the OIS structure.

2. The electronic device of claim 1, wherein the AF guide portion is positioned inside the OIS structure, and
the AF structure is configured to move relative to the OIS structure in the optical axis direction.

3. The electronic device of claim 1, wherein the OIS structure comprises an OIS side portion 353 configured to connect the first OIS guide portion and the second OIS guide portion, and
the AF structure comprises an AF side portion 362 spaced apart from the OIS side portion by a first distance in a lower portion of the OIS side portion, and is movable relative to the OIS structure in the optical axis direction by the first distance.

4. The electronic device of claim 1, wherein the first OIS coil and the second OIS coil are fixed to the camera housing.

5. The electronic device of claim 1, wherein the camera module further comprises a first flexible printed circuit board (FPCB) 301 configured to transfer a current generated in a driving circuit thereof to the first OIS coil and the second OIS coil.

6. The electronic device of claim 1, wherein the camera module further comprises a second FPCB 302 configured to transfer a current generated in a driving circuit thereof to the AF coil.

7. The electronic device of claim 1, wherein the camera module further comprises:
an image sensor 390 disposed in the AF structure and electrically connected to a third FPCB 303 of the electronic device; and
an infrared (IR) filter 380 disposed in the AF structure so as to cover the image sensor and configured to face the lens unit.

8. The electronic device of claim 7, wherein the AF structure comprises a first mounting portion 364 in which the image sensor is positioned and a second mounting portion 365 formed in an upper side of the first mounting portion and in which the IR filter is disposed.

9. The electronic device of claim 1, wherein the first OIS coil is configured to face a first surface of the first magnetic body,
the second OIS coil is configured to face a first surface of the second magnetic body, and
the AF coil is configured to face a second surface perpendicular to the first surface of the first magnetic body.

10. The electronic device of claim 9, wherein the first magnetic body comprises a polarized region having at least one N pole and at least one S pole on each surface.

11. The electronic device of claim 1, further comprising a first guide groove formed in at least one of the AF guide portion or the first OIS guide portion and in which the AF ball is disposed.

12. The electronic device of claim 1, wherein the camera module further comprises a middle guide 340 coupled with the OIS structure between the camera housing and the OIS structure, and
the middle guide comprises a second guide groove in which the OIS ball is seated.

13. The electronic device of claim 1, wherein the OIS structure comprises a third guide groove in which the OIS ball is disposed.

14. The electronic device of claim 1, wherein the camera module further comprises a rhomboid prism 600 disposed in the AF structure and having at least a portion facing the lens unit.

15. The electronic device of claim 3, further comprising at least one camera module 701 configured to face the OIS side portion of the OIS structure.
